# EUROPEAN PATENT APPLICATION

(11) **EP 2 923 891 A2**
(43) Date of publication of application: **30.09.2015**
(21) Application number: 15152982.3
(22) Date of filing: 29.01.2015
(51) Int. Cl.: B60Q 3/02

(54) **Vehicle interior lighting device**

(30) Priority: 25.03.2014 JP 2014062722; 25.03.2014 JP 2014062723; 25.03.2014 JP 2014062209; 25.03.2014 JP 2014062448
(71) Applicant: Toshiba Lighting & Technology Corporation, Yokosuka-shi Kanagawa 237-8510 (JP)
(72) Inventor: Shiraishi, Hiromitsu, Kanagawa, 237-8510 (JP); Nagano, Masamitsu, Kanagawa, 237-8510 (JP); Tsuchiya, Ryuji, Kanagawa, 237-8510 (JP); Matsuda, Yohei, Kanagawa, 237-8510 (JP)
(74) Representative: Bokinge, Ole

(57) **Abstract**

According to one embodiment, there is provided a vehicle interior lighting device (1) including a plurality of light-emitting elements (3b), a switch (3c) for switching an ON mode for lighting at least a part of the plurality of light-emitting elements and a DOOR mode for lighting at least a part of the plurality of light-emitting elements when a door of a vehicle is in an open state and extinguishing the plurality of light-emitting elements when doors of the vehicle are in a closed state, and a control section (3d) configured to control light-emitting states of the plurality of light-emitting elements to set an amount of light in the DOOR mode to be more than an amount of light in the ON mode.

## Description

### FIELD

Embodiments described herein relate to a vehicle interior lighting device.

### BACKGROUND

There is a vehicle interior lighting device including a light-emitting diode as a light source and provided in the interior of an automobile.

Such a vehicle interior lighting device includes a switch for switching an ON mode for lighting the light-emitting diode, an OFF mode for extinguishing the light-emitting diode, and a DOOR mode for lighting the light-emitting diode when a door of the vehicle is in an open state and extinguishing the light-emitting diode when doors of the vehicle are in a closed state.

The vehicle interior lighting device distinguishes the modes according to states of an operation section of the switch.

However, it is hard to see the states of the operation section. For example, it is likely that a passenger mistakes the ON mode for the DOOR mode and leaves the vehicle and the light-emitting diode is left in a lit state.

There is proposed a vehicle interior lighting device in which an amount of light of a bulb in the DOOR mode is less than an amount of light of the bulb in the ON mode.

However, if the amount of light of the bulb in the DOOR mode is reduced, it is likely that the safety in getting on and off the vehicle is deteriorated.

### BRIEF DESCRIPTION OF THE DRAWINGS

FIG. 1 is a schematic view for illustrating a vehicle interior lighting device according to an embodiment;
FIG. 2 is a schematic sectional view of the vehicle interior lighting device;
FIG. 3 is a schematic exploded view of the vehicle interior lighting device;
FIGS. 4A to 4C are schematic views for illustrating switching of modes;
FIG. 5 is a schematic perspective view for illustrating an operation section according to another embodiment;
FIG. 6A is a schematic view for illustrating a light-emitting region in an ON mode and a light-emitting region in a DOOR mode set different from each other;
FIG. 6B is a schematic sectional view in a B-B line direction in FIG. 6A;
FIGS. 7A and 7B are schematic views for illustrating the light-emitting region in the ON mode and the light-emitting region in the DOOR mode set different from each other;
FIG. 8 is a schematic sectional view of a vehicle interior lighting device according to still another embodiment;
FIG. 9 is a schematic exploded view of the vehicle interior lighting device;
FIGS. 10A and 10B are schematic views for illustrating disposing forms of light-emitting elements;
FIG. 11A is a schematic view for illustrating a light-emitting region in an ON mode and a light-emitting region in a DOOR mode set different from each other;
FIG. 11B is a schematic sectional view in a B-B line direction in FIG. 11A;
FIG. 12A is a schematic view for illustrating the light-emitting region in the ON mode and the light-emitting region in the DOOR mode set different from each other; and
FIG. 12B is a schematic sectional view in a C-C line direction in FIG. 12A.

### DETAILED DESCRIPTION

In general, according to one embodiment, there is provided a vehicle interior lighting device including: a plurality of light-emitting elements; a switch for switching an ON mode for lighting at least a part of the plurality of light-emitting elements and a DOOR mode for lighting at least a part of the plurality of light-emitting elements when a door of a vehicle is in an open state and extinguishing the plurality of light-emitting elements when doors of the vehicle are in a closed state; and a control section configured to control light-emitting states of the plurality of light-emitting elements to set an amount of light in the DOOR mode to be more than an amount of light in the ON mode.

With the vehicle interior lighting device, it is possible to easily distinguish the ON mode and the DOOR mode and improve the safety in getting on and off the vehicle.

The control section can control the light-emitting states of the plurality of light-emitting elements to further set a lighting pattern in the ON mode and a lighting pattern in the DOOR mode to be different from each other.

Consequently, it is possible to more easily distinguish the ON mode and the DOOR mode and further improve the safety in getting on and off the vehicle.

It is also possible to perform lighting rendition.

The control section can control the light-emitting states of the plurality of light-emitting elements to further set a light-emitting region in the ON mode and a light-emitting region in the DOOR mode to be different from each other.

Consequently, it is possible to more easily distinguish the ON mode and the DOOR mode and further improve the safety during getting on and getting off.

It is also possible to perform lighting rendition.

In this case, the transmittance of light of a first member provided in the light-emitting region in the ON mode can be set different from the transmittance of light of a second member provided in the light-emitting region in the DOOR mode.

Consequently, it is possible to more easily distinguish the ON mode and the DOOR mode and further improve the safety during getting on and getting off.

It is also possible to perform more sophisticated lighting rendition.

The first member and the second member can be joined by a two-color molding method or fitting. An end section on a light incident side of the second member can be formed to face a part of the plurality of light-emitting elements.

Consequently, it is possible to more easily distinguish the ON mode and the DOOR mode and further improve the safety during getting on and getting off.

It is also possible to perform more sophisticated lighting rendition.

According to another embodiment, there is provided a vehicle interior lighting device including: a plurality of first light-emitting elements; a plurality of second light-emitting elements; a switch for switching an ON mode for lighting at least a part of the plurality of first light-emitting elements and the plurality of second light-emitting elements and a DOOR mode for lighting at least a part of the plurality of first light-emitting elements and the plurality of second light-emitting elements when a door of a vehicle is in an open state and extinguishing the plurality of first light-emitting elements and the plurality of second light-emitting elements when doors of the vehicle are in a closed state; and a control section configured to control light-emitting states of the plurality of first light-emitting elements and the plurality of second light-emitting elements to set at least any one of a light-emitting color, chromaticity, and color temperature in the ON mode and at least any one of a light-emitting color, chromaticity, and color temperature in the DOOR mode to be different from each other.

With the vehicle-interior lighting device, it is possible to easily distinguish the ON mode and the DOOR mode.

The control section can control light-emitting states of the plurality of first light-emitting elements and the plurality of second light-emitting elements to further set a lighting pattern in the ON mode and a lighting pattern in the DOOR mode to be different from each other.

Consequently, it is possible to more easily distinguish the ON mode and the DOOR mode.

It is also possible to perform lighting rendition.

The control section can control light-emitting states of the plurality of first light-emitting elements and the plurality of second light-emitting elements to further set a light-emitting region in the ON mode and a light-emitting region in the DOOR mode to be different from each other.

Consequently, it is possible to more easily distinguish the ON mode and the DOOR mode.

It is also possible to perform lighting rendition.

In this case, the transmittance of light of a first member provided in the light-emitting region in the ON mode can be set different from the transmittance of light of a second member provided in the light-emitting region in the DOOR mode.

Consequently, it is possible to more easily distinguish the ON mode and the DOOR mode.

It is also possible to perform more sophisticated lighting rendition.

The first member and the second member can be joined by a two-color molding method or fitting. An end section on a light incident side of the second member can be formed to face a part of the plurality of first light-emitting elements and the plurality of second light-emitting elements.

Consequently, it is possible to more easily distinguish the ON mode and the DOOR mode.

It is also possible to perform more sophisticated lighting rendition.

According to still another embodiment, there is provided a vehicle interior lighting device including: a plurality of light-emitting elements; a switch for switching an ON mode for lighting at least a part of the plurality of light-emitting elements and a DOOR mode for lighting at least a part of the plurality of light-emitting elements when a door of a vehicle is in an open state and extinguishing the plurality of light-emitting elements when doors of the vehicle are in a closed state; and a control section configured to control light-emitting states of the plurality of light-emitting elements to set a light-emitting region in the ON mode and a light-emitting region in the DOOR mode to be different from each other.

With the vehicle interior lighting device, it is possible to easily distinguish the ON mode and the DOOR mode.

The vehicle interior lighting device can further include an optical element provided in at least one of the light-emitting region in the ON mode and the light-emitting region in the DOOR mode and configured to generate a desired light condensation characteristic and a desired luminous intensity distribution characteristic.

Consequently, it is possible to more easily distinguish the ON mode and the DOOR mode.

It is also possible to perform lighting rendition.

The control section can control light-emitting states of the plurality of light-emitting elements to cause the plurality of light-emitting elements to irradiate light on an entire vehicle interior in the ON mode and irradiate light on at least one of the vicinities of the doors of the vehicle and the vicinities of seats in the DOOR mode.

Consequently, it is possible to perform irradiation of light corresponding to a purpose of lighting in the ON mode and a purpose of lighting in the DOOR mode.

It is also possible to perform lighting rendition.

The transmittance of light of a first member provided in the light-emitting region in the ON mode can be set different from the transmittance of light of a second member provided in the light-emitting region in the DOOR mode.

Consequently, it is possible to further improve distinction for the DOOR mode.

It is also possible to perform more sophisticated lighting rendition.

The first member and the second member can be joined by a two-color molding method or fitting. An end section on a light incident side of the second member can be formed to face a part of the plurality of light-emitting elements.

Consequently, it is possible to further improve the distinction for the DOOR mode.

It is also possible to perform more sophisticated lighting rendition.

The control section can control light-emitting states of the plurality of light-emitting elements to further set at least any one of a light-emitting color, chromaticity, color temperature, and an amount of light in the ON mode and at least any one of a light-emitting color, chromaticity, color temperature, and an amount of light in the DOOR mode to be different from each other.

Consequently, it is possible to easily distinguish the ON mode and the DOOR mode.

It is also possible to perform more sophisticated lighting rendition.

The control section can control light-emitting states of the plurality of light-emitting elements to further set a lighting pattern in the ON mode and a lighting pattern in the DOOR mode to be different from each other.

Consequently, it is possible to more easily distinguish the ON mode and the DOOR mode.

It is also possible to perform more sophisticated lighting rendition.

Embodiments are illustrated below with reference to the drawings. Note that, in the figures, the same constituent elements are denoted by the same reference numerals and signs and detailed explanation of the constituent elements is omitted as appropriate.

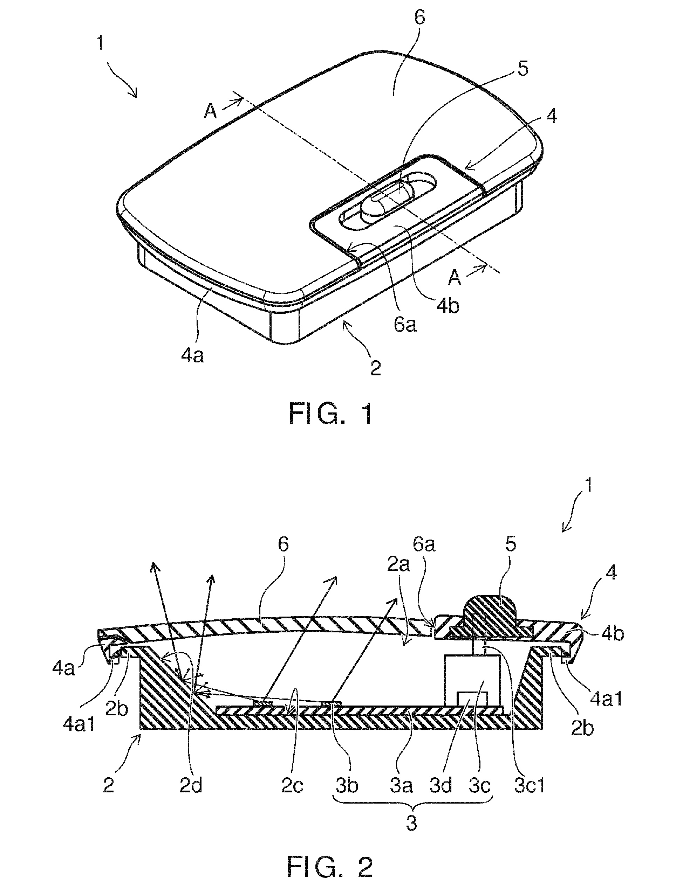

FIG. 1 is a schematic perspective view for illustrating a vehicle interior lighting device 1 according to an embodiment.

FIG. 2 is a schematic sectional view of the vehicle interior lighting device 1.

Note that FIG. 2 is a schematic sectional view in an A-A line direction in FIG. 1.

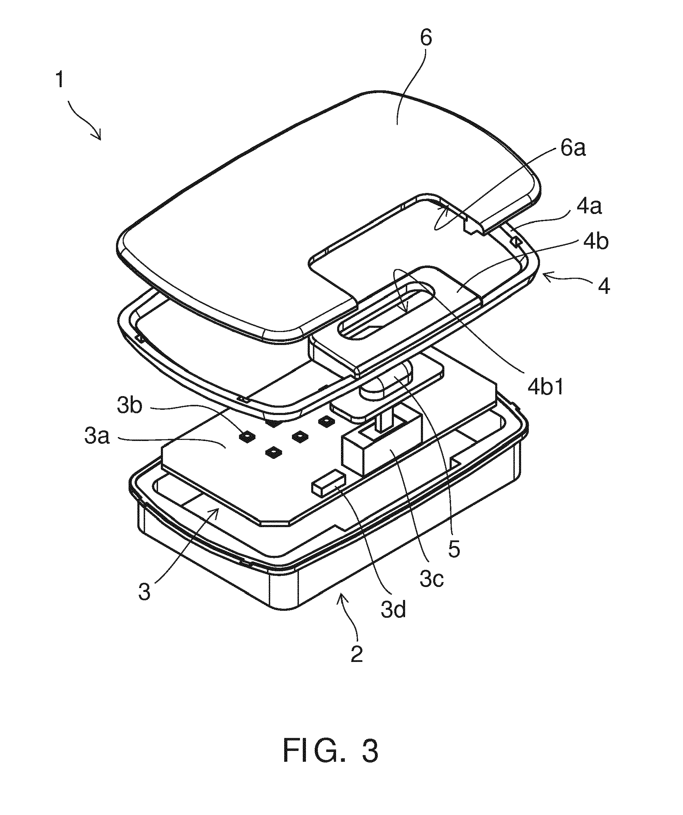

FIG. 3 is a schematic exploded view of the vehicle interior lighting device 1.

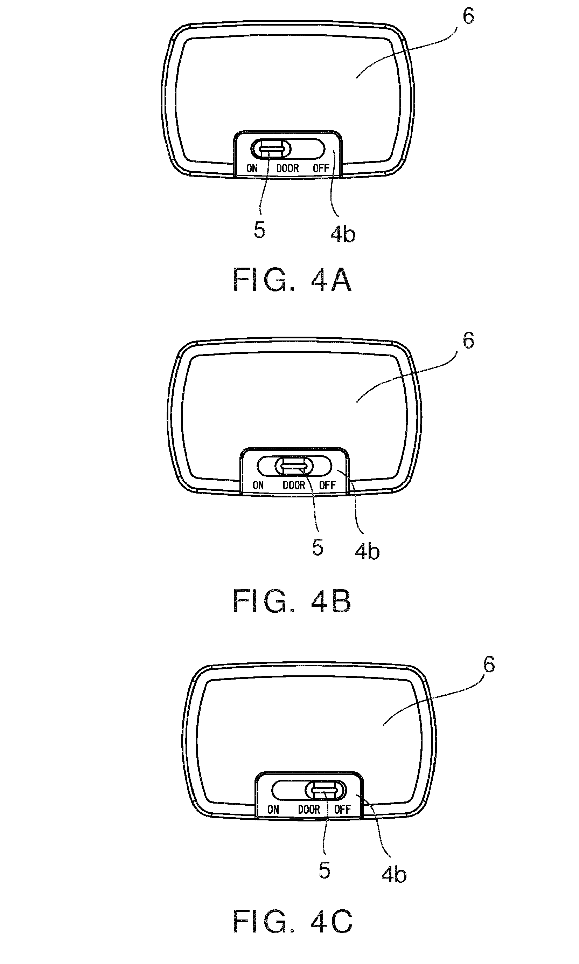

FIGS. 4A to 4C are schematic views for illustrating switching of modes.

The vehicle interior lighting device 1 can be provided in, for example, an opening provided on a ceiling surface, a sidewall surface, or the like of the interior of an automobile.

As shown in FIGS. 1 to 3, the vehicle interior lighting device 1 includes a housing 2, a light-emitting section 3, a frame 4, an operation section 5, and a cover 6.

The housing 2 assumes a box shape. One end section 2a of the housing 2 is opened. At the end section 2a of the housing 2, a flange section 2b projecting toward the outside of the housing 2 is provided. The flange section 2b assumes an annular shape and is provided to surround the end section 2a of the housing 2.

The light-emitting section 3 is provided on a bottom surface 2c on the inside of the housing 2.

A side surface 2d on the inside of the housing 2 is formed as a slope. The side surface 2d inclines in a direction in which the bottom surface 2c side of the side surface 2d approaches the center side of the housing 2.

A part of light irradiated from a light-emitting element 3b is made incident on the side surface 2d. The light made incident on the side surface 2d is reflected and irradiated to the outside of the vehicle interior lighting device 1 via the cover 6 (see FIG. 2).

For example, when the side surface 2d is a surface perpendicular to the bottom surface 2c, a part of the light made incident on the side surface 2d is less easily irradiated to the outside of the vehicle interior lighting device 1.

In this embodiment, the side surface 2d inclines in the direction in which the bottom surface 2c side of the side surface 2d approaches the center side of the housing 2. Therefore, the light made incident on the side surface 2d is easily irradiated to the outside of the vehicle interior lighting device 1.

The material of the housing 2 is not particularly limited. The housing 2 can be formed using, for example, a resin material or a metal material.

In this case, when it is taken into account that a part of the light irradiated from the light-emitting element 3b is made incident on the side surface 2d, the material of the housing 2 is preferably a material having high reflectance to the light irradiated from the light-emitting element 3b.

Examples of the material having high reflectance include white resin and resin mixed with particles of titanium oxide or the like.

When a heat value of the light-emitting element 3b or the like provided in the light-emitting section 3 is large, the material of the housing 2 is preferably a material having high heat conductivity.

Examples of the material having high heat conductivity include high heat conductivity resin, metal, and ceramics such as aluminum oxide and aluminum nitride.

Note that the high heat conductivity resin is resin obtained by mixing fibers or particles made of carbon, aluminum oxide, or the like having high heat conductivity in resin of, for example, PET (Polyethyleneterephthalate) or nylon.

The light-emitting section 3 includes a substrate 3a, a light-emitting element 3b, a switch 3c, and a control section 3d.

The substrate 3a assumes a tabular shape. A not-shown wiring pattern is provided on the surface of the substrate 3a.

The substrate 3a can be formed of, for example, ceramics such as aluminum oxide or aluminum nitride, an organic material such as paper phenol or glass epoxy, or a metal plate, the surface of which is coated with an insulating material.

Note that, when the surface of the metal plate is coated with the insulating material, the insulating material may be made of an organic material or may be made of an inorganic material.

When a heat value of the light-emitting element 3b or the like is large, it is preferable to form the substrate 3a using a material having high heat conductivity from the viewpoint of thermal radiation. Examples of the material having high heat conductivity include ceramics such as aluminum oxide and aluminum nitride, the high heat conductivity resin, and a metal plate, the surface of which is coated with an insulator.

The substrate 3a may be a single layer or a multilayer.

One end of a not-shown power-supply terminal is connected to the not-shown wiring pattern of the substrate 3a. The other end of the not-shown power-supply terminal is exposed from the housing 2. An external power supply or the like is connected to the not-shown power-supply terminal exposed from the housing 2 via a not-shown socket or the like.

A plurality of the light-emitting elements 3b are provided on the substrate 3a.

The light-emitting elements 3b can be, for example, light-emitting diodes or laser diodes.

The number of the light-emitting elements 3b is not particularly limited. The number of the light-emitting elements 3b can be changed as appropriate according to the use, the size, and the like of the vehicle interior lighting device 1. That is, the number of the light-emitting elements 3b only has to be two or more.

The arrangement of the plurality of light-emitting elements 3b may be regular arrangement such as a matrix shape or a concentric circle shape or may be any arrangement.

A connection method for the light-emitting elements 3b and the not-shown wiring pattern provided on the surface of the substrate 3a is not particularly limited. For example, the light-emitting elements 3b can be electrically connected to the not-shown wiring pattern via a wire. For example, the light-emitting elements 3b may be mounted by COB (Chip On Board) directly connected to the not-shown wiring pattern.

The light-emitting elements 3b can be directly provided on the substrate 3a or can be provided on the substrate 3a via an envelope like, for example, a PLCC (Plastic Leaded Chip Carrier) type.

Further, according to necessity, annular reflectors surrounding the light-emitting elements 3b can be provided, the light-emitting elements 3b can be sealed by resin, or phosphors can be included in the resin for sealing the light-emitting element 3b.

The switch 3c is provided on the substrate 3a. The switch 3c is electrically connected to the not-shown wiring pattern provided on the surface of the substrate 3a.

The switch 3c can be, for example, a slide switch.

As shown in FIGS. 4A to 4C, a knob 3c1 provided in the switch 3c is slid to the left and right via the operation section 5, whereby an ON mode, an OFF mode, and a DOOR mode can be switched.

For example, as shown in FIG. 4A, the operation section 5 is slid to the left side to switch the vehicle interior lighting device 1 to the ON mode. As shown in FIG. 4B, the operation section 5 is slid to the center to switch the vehicle interior lighting device 1 to the DOOR mode. As shown in FIG. 4C, the operation section 5 is slid to the right side to switch the vehicle interior lighting device 1 to the OFF mode.

Note that the ON mode is a mode for lighting at least a part of the plurality of light-emitting elements 3b.

The OFF mode is a mode for extinguishing the plurality of light-emitting elements 3b.

The DOOR mode is a mode for lighting at least a part of the plurality of light-emitting elements 3b when a door of a vehicle is in an open state and extinguishing the plurality of light-emitting elements 3b when doors of the vehicle are in a closed state.

The control section 3d is provided on the substrate 3a.

The control section 3d controls light-emitting states of the plurality of light-emitting elements 3b to set an amount of light in the DOOR mode to be more than an amount of light in the ON mode.

The control section 3d can also control the light-emitting states of the plurality of light-emitting elements 3b to set a lighting pattern in the ON mode and a lighting pattern in the DOOR mode to be different from each other.

The control section 3d can also control the light-emitting states of the plurality of light-emitting elements 3b to set a light-emitting region in the ON mode and a light-emitting region in the DOOR mode to be different from each other.

The control section 3d can also control the light-emitting states of the plurality of light-emitting elements 3b to set at least any one of a light-emitting color, chromaticity, color temperature, and an amount of light in the ON mode and at least any one of a light-emitting color, chromaticity, color temperature, and an amount of light in the DOOR mode to be different from each other.

The control section 3d controls the light-emitting states of the plurality of light-emitting elements 3b to set an amount of light obtained when the doors of the vehicle are in the closed state in the DOOR mode to be equal to or less than a half, one fifth, one tenth, or one hundredth of an amount of light obtained when a door of the vehicle is in the open state.

The control section 3d can also set the amount of light obtained when the doors of the vehicle are in the closed state in the DOOR mode to be equal to or less than a half, one fifth, one tenth, or one hundredth of an amount of light in the ON mode.

The control section 3d can be a control circuit including circuit components such as a resistor, a capacitor, and an integrated circuit or can be a control section including an arithmetic element and a storage element and configured to cause the arithmetic element to operate with software stored in the storage element.

Note that details of the control section 3d are explained below.

The frame 4 is provided on the end section 2a side (an opening side) of the housing 2.

The frame 4 includes an edge section 4a and a retaining section 4b.

The edge section 4a assumes a frame shape. A claw section 4a1 is provided in the edge section 4a. The distal end of the claw section 4a1 projects toward the center side of the frame 4 to make it possible to retain the flange section 2b of the housing 2. The frame 4 is fixed to the end section 2a side of the housing 2 by the claw section 4a1 (see FIG. 2).

One end of the retaining section 4b is provided in the edge section 4a. The other end of the retaining section 4b projects toward the center side of the frame 4. A hole section 4b1 for attaching the operation section 5 is provided in the retaining section 4b. The hole section 4b1 has a shape extending in a predetermined direction. A not-shown guide section is provided on the inside of the hole section 4b1 to make it possible to retain the operation section 5 and slide the operation section 5 along the hole section 4b1.

The edge section 4a is provided under the cover 6. Therefore, the area of the cover 6, which is an irradiation surface of light, can be increased in size.

That is, according to this embodiment, it is possible to increase an illumination area.

The retaining section 4b is exposed from the cover 6. Therefore, by changing the color, the shape, and the like of the retaining section 4b, it is easy to obtain optimum design of the vehicle interior lighting device 1 for each of a plurality of kinds of design of interior materials in the vehicle interior.

For example, it is possible to, attaching importance to functions of the vehicle interior lighting device, form the housing 2 from a material having high light reflectivity or a material having high heat conductivity and, attaching importance to a design property, form the frame 4, which includes the retaining section 4b exposed from the cover 6, from various materials.

In this case, the material of the frame 4 can be selected from various materials such as a metal material, a resin material, and ceramics.

Furthermore, by replacing only the frame 4, it is possible to obtain optimum design of the vehicle interior lighting device 1 for each of the plurality of kinds of design of the interior materials.

The operation section 5 is provided on the inside of the hole section 4b1. One end of the operation section 5 projects from the retaining section 4b. A not-shown recessed section is provided at the other end of the operation section 5. The knob 3c1 of the switch 3c is inserted into the not-shown recessed section. Therefore, by sliding the operation section 5, it is possible to slide the knob 3c1 of the switch 3c.

By sliding the operation section 5 along the hole section 4b1, it is possible to switch the ON mode, the OFF mode, and the DOOR mode.

In this case, the operation section 5 is retained by the retaining section 4b. Therefore, it is possible to suppress force applied to the operation section 5 from being transmitted to the switch 3c. As a result, it is possible to suppress breakage of the switch 3c.

The material of the operation section 5 is not particularly limited. For example, various materials such as a metal material, a resin material, and ceramics can be used.

Note that a slide switch is adopted as the switch 3c to slide the operation section 5. However, the switch 3c and the operation section 5 are not limited to this.

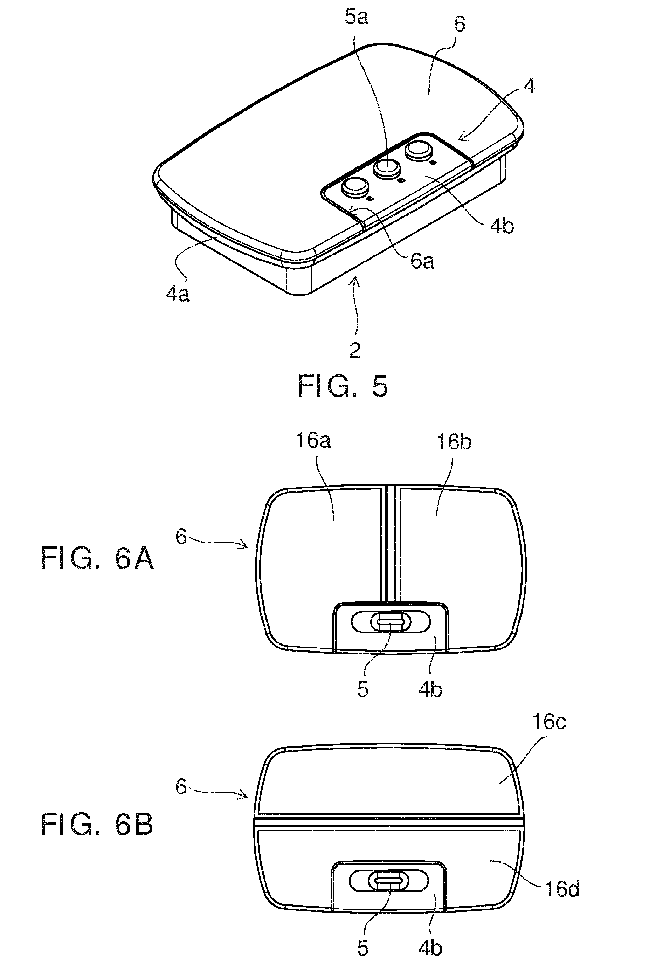

FIG. 5 is a schematic perspective view for illustrating an operation section 5a according to another embodiment.

For example, as shown in FIG. 5, a push button switch can also be adopted as the switch 3c to depress the operation section 5a.

That is, the switch 3c and the operation sections 5 and 5a only have to be capable of switching the ON mode, the OFF mode, and the DOOR mode.

The cover 6 is provided on the frame 4. In this case, the cover 6 is provided to cover the edge section 4a of the frame 4 and the opening of the frame 4.

The cover 6 includes a cutout section 6a (see FIG. 3). The retaining section 4b of the frame 4 is provided on the inside of the cutout section 6a. Therefore, the retaining section 4b of the frame 4 can be exposed from the cover 6.

The cover 6 has a curved surface shape convex on the center side. However, the shape of the cover 6 is not limited to the illustrated shape and can be changed as appropriate according to the use of the vehicle interior lighting device 1, the design of the interior materials in the vehicle interior, and the like.

The cover 6 is provided to suppress glare. Therefore, the transmittance of light of the cover 6 is set low in order to reduce the intensity of incident light.

For example, the transmittance of light is reduced by applying diffusion treatment such as blasting to at least one of an incident surface and an irradiation surface of the cover 6 or providing a scattering layer including a scattering material in at least one of the incident surface and the irradiation surface of the cover 6.

The transmittance of light can also be reduced by forming the cover 6 from a translucent material including the scattering material.

The scattering material can be, for example, a material obtained by adding, to the translucent material, particulates having a refractive index different from the refractive index of the translucent material. The particulates can be, for example, particulates made of titanium oxide.

In this case, if the linear transmittance of light in the cover 6 is set to 60% or lower, it is possible to effectively suppress glare.

If the linear transmittance of light in the cover 6 is set to 30% or higher and 50% or lower, it is possible to more effectively suppress glare without spoiling the functions of the vehicle interior lighting device.

The control section 3d is further explained.

For example, as illustrated in FIGS. 4A to 4C, the modes can be switched by operating the operation section 5.

A passenger can distinguish the modes according to a state of the operation section 5 (e.g., a slide position of the operation section 5).

However, it is hard to see the state of the operation section 5. For example, the state of the operation section 5 is invisible at night and the like.

Therefore, for example, it is likely that the passenger mistakes the ON mode for the DOOR mode and leaves the vehicle and the light-emitting elements 3b are left in a lit state.

In this case, in order to distinguish the modes, an indicator consisting of a light-emitting diode or the like can also be provided in the vicinity of the operation section 5.

However, when harmony with the design of the interior materials in the vehicle interior is taken into account, a large indicator cannot be provided.

Therefore, even if the indicator is provided, it is difficult to distinguish the modes.

If the indicator is provided, complication of structure and an increase in costs are caused.

Therefore, the control section 3d that controls light-emitting states of the plurality of light-emitting elements 3b is provided.

In this case, the control section 3d controls the light-emitting states of the plurality of light-emitting elements 3b to set an amount of light in the DOOR mode to be more than an amount of light in the ON mode.

The control section 3d can set the amount of light in the DOOR mode to be more than the amount of light in the ON mode by, for example, changing a current value applied to the plurality of light-emitting elements 3b or changing the number of the light-emitting elements 3b to be lit.

Consequently, even when it is hard to see the state of the operation section 5 and the indicator, it is possible to easily distinguish the ON mode and the DOOR mode.

Furthermore, it is possible to improve the safety in getting on and off the vehicle.

The control section 3d can also control light-emitting states of the plurality of light-emitting elements 3b to set an amount of light obtained when the doors of the vehicle are in the closed state in the DOOR mode to be equal to or less than a half, one fifth, one tenth, or one hundredth of an amount of light obtained when a door of the vehicle is in the open state.

The control section 3d can also set the amount of light obtained when the doors of the vehicle are in the closed state in the DOOR mode to be equal to or less than a half, one fifth, one tenth, or one hundredth of the amount of light in the ON mode.

Consequently, when the doors of the vehicle is in the closed state, it is seen that the vehicle interior lighting device 1 is in the DOOR mode if the vehicle interior lighting device 1 is slightly lit.

Therefore, even when it is hard to see the state of the operation section 5 and the indicator, it is possible to easily distinguish the ON mode and the DOOR mode.

Furthermore, it is possible to increase an amount of light when the doors of the vehicle are in the open state in the DOOR mode. Therefore, it is possible to improve the safety in getting on and off the vehicle.

Purposes of lighting in the ON mode are improvement of comfortableness in the vehicle interior, improvement of visibility in hand work of the passenger, improvement of safety, and the like.

Purposes of lighting in the DOOR mode are improvement of visibility in getting on and off the vehicle, improvement of visibility from other vehicles, and the like.

Therefore, it is possible to set an amount of light in the ON mode according to a purpose of lighting in the ON mode and set an amount of light in the DOOR mode according to a purpose of lighting in the DOOR mode.

For example, in the lighting in the ON mode, it is possible to reduce the amount of light taking into account comfortableness in the vehicle interior.

Note that, in the lighting in the ON mode, it is also possible to increase the amount of light taking into account improvement of visibility in hand work of the passenger, improvement of safety, and the like.

In the lighting in the DOOR mode, it is possible to increase the amount of light taking into account visibility in getting on and off the vehicle and visibility from other vehicles.

In order to improve distinction for the DOOR mode, the control section 3d sets the amount of light obtained when the doors of the vehicle are in the closed state to be equal to or less than a half, one fifth, one tenth, or one hundredth of an amount of light obtained when a door of the vehicle is in the open state.

In this case, if a difference between the amounts of light is too small, the distinction for the DOOR mode is deteriorated.

According to the knowledge obtained by the inventors, if the amount of light obtained when the doors of the vehicle are in the closed state is set to be equal to or less than a half and, preferably, equal to or less than one fifth of the amount of light obtained when a door of the vehicle is in the open state, it is possible to suppress the distinction for the DOOR mode from being deteriorated.

In this case, as a difference between the amounts of light is larger, it is possible to more easily distinguish the ON mode and the DOOR mode.

According to the knowledge obtained by the inventors, the amount of light obtained when the doors of the vehicle are in the closed state is preferably set to be equal to or less than one tenth and more preferable set to be equal to or less than one hundredth of the amount of light obtained when a door of the vehicle is in the open state.

The control section 3d can also control the light-emitting states of the plurality of light-emitting elements 3b to set a lighting pattern in the ON mode and a lighting pattern in the DOOR mode to be different from each other.

In this case, it is possible to set the lighting pattern in the ON mode according to a purpose of lighting in the ON mode and set the lighting pattern in the DOOR mode according to a purpose of lighting in the DOOR mode.

For example, in the lighting in the ON mode, it is possible to perform continuous lighting taking into account comfortableness in the vehicle interior, visibility in hand work, safety, and the like.

In the lighting in the DOOR mode, it is possible to perform blinking taking into account visibility from other vehicles.

In the lighting in the DOOR mode, it is also possible to gradually increase or gradually reduce the amount of light from the start of the lighting or increase or reduce the amount of light stepwise.

Note that, in the lighting in the ON mode, it is also possible to perform blinking or gradually increase or reduce the amount of light from the start of the lighting or increase or reduce the amount of light stepwise from the start of the lighting.

In this case, it is possible to perform continuous lighting in the lighting in the DOOR mode.

Consequently, even when it is hard to see the state of the operation section 5 and the indicator, it is possible to easily distinguish the ON mode and the DOOR mode.

Furthermore, it is also possible to perform lighting rendition.

The control section 3d can also control the light-emitting states of the plurality of light-emitting elements 3b to set a light-emitting region in the ON mode and a light-emitting region in the DOOR mode to be different from each other.

FIGS. 6A and 6B are schematic views for illustrating the light-emitting region in the ON mode and the light-emitting region in the DOOR mode set different from each other.

For example, as shown in FIG. 6A, the light-emitting region can be divided into a light-emitting region 16a and a light-emitting region 16b in the longitudinal direction of the cover 6.

For example, in the lighting in the ON mode, it is possible to light the light-emitting elements 3b in the light-emitting region 16a and the light-emitting region 16b.

In the DOOR mode, it is possible to light the light-emitting elements 3b in one of the light-emitting region 16a and the light-emitting region 16b.

In this case, it is possible to light the light-emitting elements 3b in the light-emitting region present in a direction where a door of the vehicle opens.

Consequently, it is possible to easily specify the opened door.

The light-emitting region can be divided into a light-emitting region 16c and a light-emitting region 16d in the latitudinal direction of the cover 6.

For example, in the lighting in the ON mode, it is possible to light the light-emitting elements 3b in the light-emitting region 16c and the light-emitting region 16d.

In the lighting in the DOOR mode, it is possible to light the light-emitting elements 3b in one of the light-emitting region 16c and the light-emitting region 16d.

In this case, it is possible to light the light-emitting elements 3b in the light-emitting region present in a direction where a door of the vehicle opens.

Consequently, it is possible to easily specify the opened door.

The control section 3d can light the light-emitting elements 3b corresponding to the light-emitting regions to set the light-emitting region in the ON mode and the light-emitting region in the DOOR mode to be different from each other.

The number of light-emitting regions is not limited to two. A plurality of light-emitting regions only have to be provided.

In this case, it is possible to set the number of the light-emitting regions to the number same as the number of the doors of the vehicle and provide the light-emitting regions respectively corresponding to the plurality of doors.

The control section 3d can also control light-emitting states of the plurality of light-emitting elements 3b to cause the light-emitting elements 3b to irradiate light on the entire vehicle interior in the ON mode and irradiate light at least on the vicinities of the doors of the vehicle and the vicinities of the seats in the DOOR mode.

As illustrated in FIGS. 6A and 6B, the cover 6 can also be divided to match the light-emitting regions.

However, the division of the cover 6 is not always necessary and can be performed as appropriate according to necessity of design or the like.

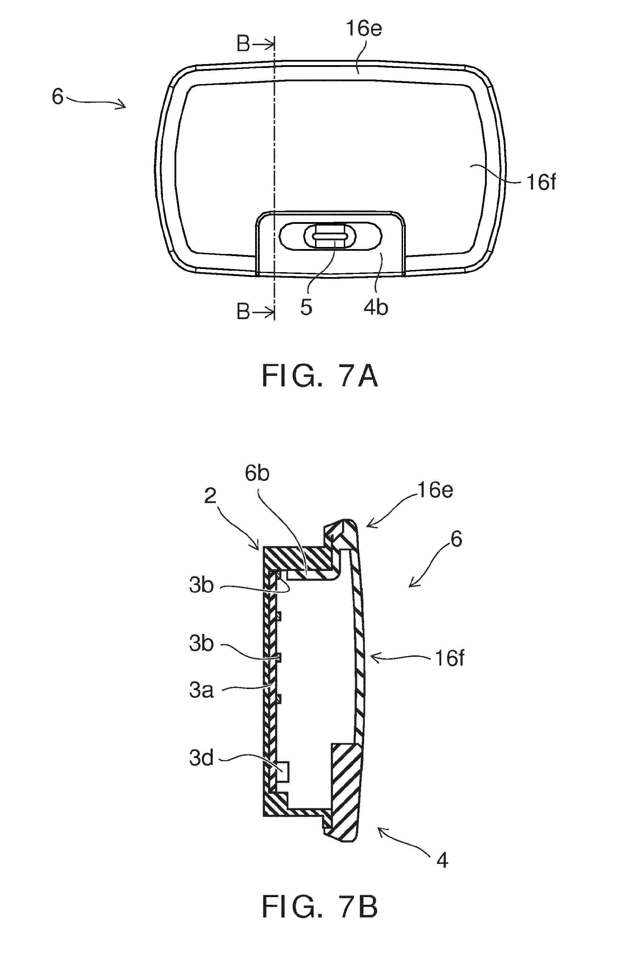

FIGS. 7A and 7B are also schematic views for illustrating the light-emitting region in the ON mode and the light-emitting region in the DOOR mode set different from each other.

Note that FIG. 7B is a schematic sectional view in a B-B line direction in FIG. 7A.

As shown in FIGS. 7A and 7B, the light-emitting region can be divided into a frame-like light-emitting region 16e provided in a peripheral edge portion of the cover 6 and a planar light-emitting region 16f provided in the center of the cover 6.

For example, in the lighting in the ON mode, it is possible to light the light-emitting elements 3b only in the light-emitting region 16e or in the light-emitting region 16f and the light-emitting region 16e. In this case, in the lighting in the DOOR mode, it is possible to light the light-emitting elements 3b only in the light-emitting region 16e.

In the lighting in the DOOR mode, it is possible to light the light-emitting elements 3b only in the light-emitting region 16f or in the light-emitting region 16f and the light-emitting region 16e and set an amount of light in the DOOR mode to be larger than an amount of light in the ON mode.

In the lighting in the ON mode, it is possible to light the light-emitting elements 3b only in the light-emitting region 16f. In this case, in the lighting in the DOOR mode, it is possible to light the light-emitting elements 3b only in the light-emitting region 16e where the amount of light in the DOOR mode is adjusted to be higher than the amount of light in the ON mode or in the light-emitting region 16f and the light-emitting region 16e.

As shown in FIG. 7B, a light guide section 6b extending to the inside of the housing 2 can be provided in the peripheral edge portion of the cover 6.

The light guide section 6b can be formed from a translucent material.

The transmittance of light of the light guide section 6b (equivalent to an example of the second member) and the transmittance of light of a portion corresponding to the light-emitting region 16e of the cover 6 (equivalent to an example of the second member) are different from the transmittance of light of a portion corresponding to the light-emitting region 16f of the cover 6 (equivalent to an example of the first member).

In this case, the transmittance of light of the light guide section 6b and the transmittance of light of the portion corresponding to the light-emitting region 16e of the cover 6 can be set higher than the transmittance of light of the portion corresponding to the light-emitting region 16f of the cover 6.

An end section on a light incident side of the light guide section 6b is provided right above the light-emitting element 3b provided at the peripheral edge of the substrate 3a.

That is, the end section on the light incident side of the light guide section 6b faces a part of the plurality of light-emitting elements 3b.

Therefore, a light amount in the light-emitting region 16e can be increased. As a result, even when the width dimension of the frame-like light-emitting region 16e is small, it is possible to increase visibility.

The light guide section 6b, the portion corresponding to the light-emitting region 16e of the cover 6, and the portion corresponding to the light-emitting region 16f of the cover 6 can be joined by a two-color molding method or fitting.

Note that, in the above illustration, the light-emitting region is divided into the frame-like light-emitting region 16e provided in the peripheral edge portion of the cover 6 and the planar light-emitting region 16f provided in the center of the cover 6. However, light-emitting regions are not limited to this.

The number of light-emitting regions, the shapes of the light-emitting regions, the sizes of the light-emitting regions, and the like can be changed as appropriate according to the size, the design, the use, and the like of the vehicle interior lighting device 1.

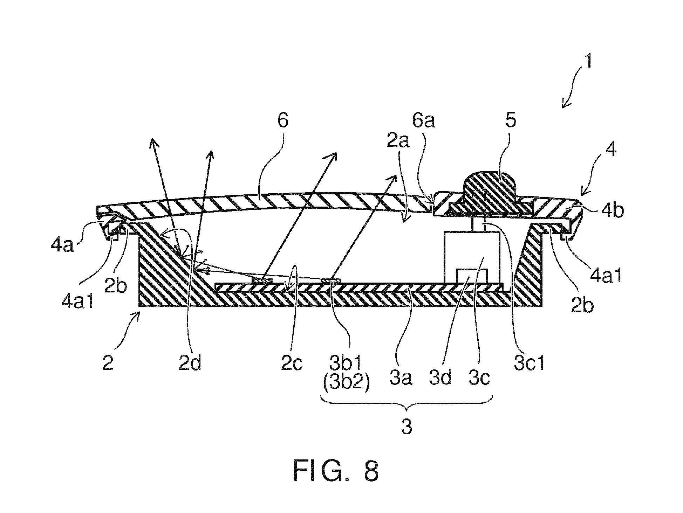

FIG. 8 is a schematic sectional view of the vehicle interior lighting device 1 according to still another embodiment.

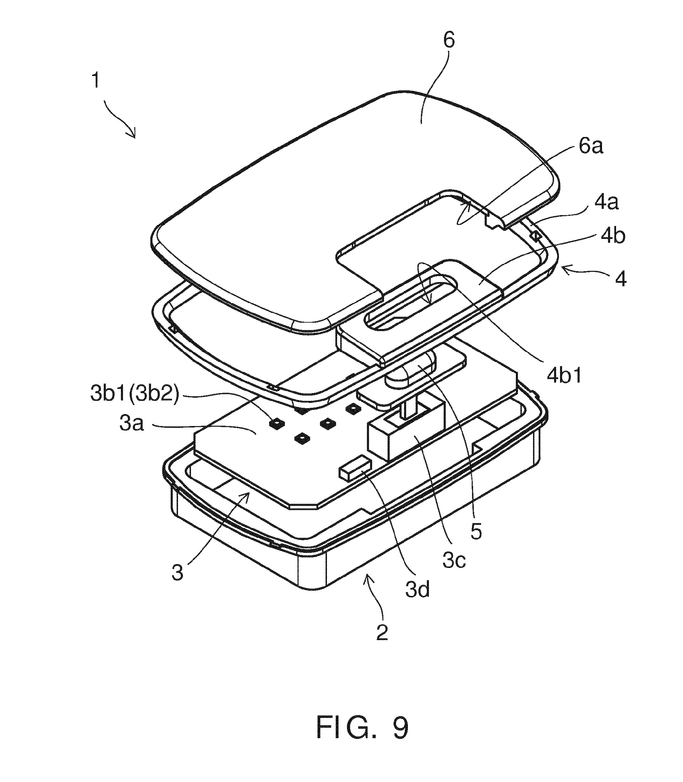

FIG. 9 is a schematic exploded view of the vehicle interior lighting device 1.

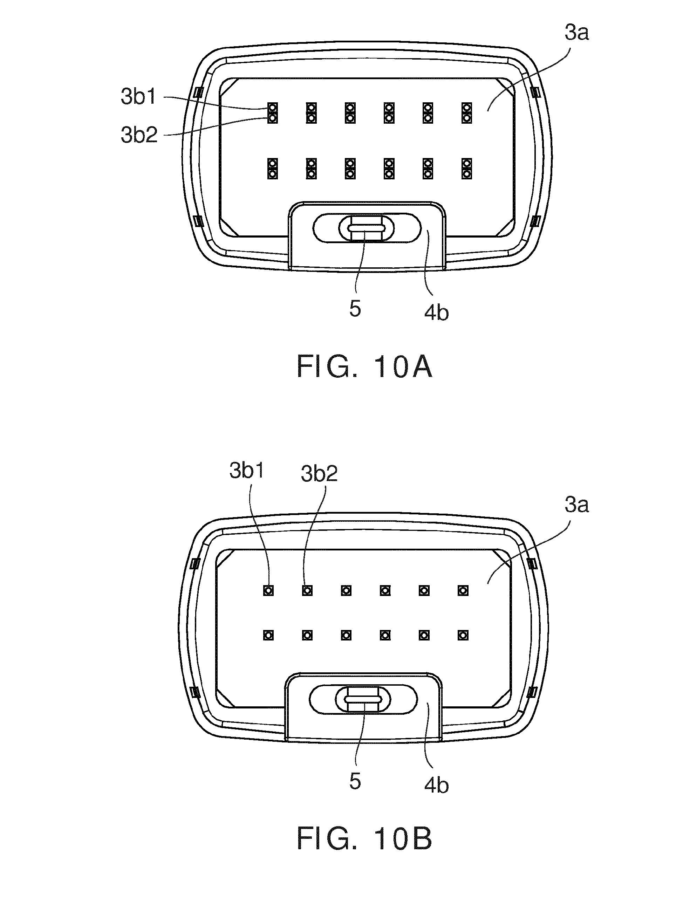

FIGS. 10A and 10B are schematic diagrams for illustrating disposing forms of light-emitting elements 3b1 and 3b2.

As shown in FIGS. 8 and 9, the light-emitting section 3 includes the substrate 3a, the light-emitting element 3b1 (equivalent to an example of the first light-emitting element), the light-emitting element 3b2 (equivalent to an example of the second light-emitting element), the switch 3c, and the control section 3d.

A part of lights irradiated from the light-emitting element 3b1 and the light-emitting element 3b2 is made incident on the side surface 2d. The light made incident on the side surface 2d is reflected and irradiated to the outside of the vehicle interior lighting device 1 via the cover 6.

Pluralities of the light-emitting elements 3b1 and 3b2 are provided on the substrate 3a.

The light-emitting elements 3b1 and 3b2 can be, for example, light-emitting diodes or laser diodes.

The numbers of the light-emitting elements 3b1 and 3b2 are not particularly limited. The numbers of the light-emitting elements 3b1 and 3b2 can be changed as appropriate according to the use, the size, and the like of the vehicle interior lighting device 1. That is, the numbers of the light-emitting elements 3b1 and 3b2 only have to be two or more.

At least any one of a light-emitting color, chromaticity, and color temperature of lights irradiated from the light-emitting elements 3b1 can be set different from at least any one of a light-emitting color, chromaticity, and color temperature of lights irradiated from the light-emitting elements 3b2.

The light-emitting colors, the chromaticities, and the color temperatures can be set different by changing semiconductor materials forming the light-emitting elements 3b1 and 3b2 or can be set different by changing phosphors provided on emission surfaces of the light-emitting elements 3b1 and 3b2.

The arrangement of the pluralities of light-emitting elements 3b1 and 3b2 may be regular arrangement such as a matrix shape or a concentric circle shape or may be any arrangement.

However, it is preferable to arrange the light-emitting elements 3b1 and the light-emitting elements 3b2 contiguous to each other as shown in FIG. 10A and alternately arrange the light-emitting elements 3b1 and the light-emitting elements 3b2 as shown in FIG. 10B.

With such an arrangement form, it is possible to set a luminous intensity distribution characteristic of the vehicle interior lighting device 1 in an ON mode and a luminous intensity distribution characteristic of the vehicle interior lighting device 1 in a DOOR mode to be substantially the same.

Note that the ON mode is a mode for lighting at least a part of the pluralities of light-emitting elements 3b1 and 3b2.

An OFF mode is a mode for extinguishing the pluralities of light-emitting elements 3b1 and 3b2.

The DOOR mode is a mode for lighting at least a part of the pluralities of light-emitting elements 3b1 and 3b2 when a door of a vehicle is in an open state and extinguishing the pluralities of the light-emitting elements 3b1 and 3b2 when doors of the vehicle are in a closed state.

A connection method for the light-emitting elements 3b1 and 3b2 and a not-shown wiring pattern provided on the surface of the substrate 3a is not particularly limited. For example, the light-emitting elements 3b1 and 3b2 can be electrically connected to the not-shown wiring pattern via a wire. For example, the light-emitting elements 3b1 and 3b2 may be mounted by COB (Chip On Board) directly connected to the not-shown wiring pattern.

The light-emitting elements 3b1 and 3b2 can be directly provided on the substrate 3a or can be provided on the substrate 3a via an envelope like, for example, a PLCC (Plastic Leaded Chip Carrier) type.

Further, according to necessity, annular reflectors surrounding the light-emitting elements 3b1 and 3b2 can be provided, the light-emitting elements 3b1 and 3b2 can be sealed by resin, or phosphors can be included in the resin for sealing the light-emitting elements 3b1 and 3b2.

The control section 3d controls light-emitting states of the pluralities of the light-emitting elements 3b1 and 3b2 to set at least any one of a light-emitting color, chromaticity, and color temperature in the ON mode and at least any one of a light-emitting color, chromaticity, and color temperature in the DOOR mode to be different from each other.

The control section 3d can also control the light-emitting states of the pluralities of light-emitting elements 3b1 and 3b2 to set a lighting pattern in the ON mode and the lighting pattern in the DOOR mode to be different from each other.

The control section 3d can also control the light-emitting states of the pluralities of light-emitting elements 3b1 and 3b2 to set a light-emitting region in the ON mode and a light-emitting region in the DOOR mode to be different from each other.

The control section 3d controls the light-emitting states of the pluralities of the light-emitting elements 3b1 and 3b2 to set at least any one of the light-emitting color, the chromaticity, and the color temperature in the ON mode and at least any one of the light-emitting color, the chromaticity, and the color temperature to be different from each other.

In this case, the control section 3d can set at least any one of the light-emitting color, the chromaticity, and the color temperature in the ON mode and at least any one of the light-emitting color, the chromaticity, and the color temperature to be different from each other by, for example, lighting any ones of the light-emitting elements 3b1 and the light-emitting elements 3b2 or changing the number and an amount of light of the light-emitting elements 3b1 to be lit and the number and an amount of light of the light-emitting elements 3b2 to be lit.

Note that the control section 3d can change the amounts of light by changing current amounts applied to the light-emitting elements 3b1 and 3b2.

Consequently, even when it is hard to see a state of the operation section 5 and an indicator, it is possible to easily distinguish the ON mode and the DOOR mode.

Purposes of lighting in the ON mode are improvement of comfortableness in the vehicle interior, improvement of visibility in hand work of the passenger, improvement of safety, and the like.

Purposes of lighting in the DOOR mode are improvement of visibility in getting on and off the vehicle, improvement of visibility from other vehicles, and the like.

Therefore, it is possible to set at least any one of the light-emitting color, the chromaticity, and the color temperature in the ON mode according to a purpose of lighting in the ON mode and set any one of the light-emitting color, the chromaticity, and the color temperature in the DOOR mode according to a purpose of lighting in the DOOR mode.

For example, in the lighting in the ON mode, it is possible to irradiate light of a warm color taking into account comfortableness in the vehicle interior.

In the lighting in the DOOR mode, it is possible to irradiate light of a bluish white color taking into account visibility in getting on and off the vehicle and visibility from other vehicles.

The control section 3d can control the light-emitting states of the pluralities of light-emitting elements 3b1 and 3b2 to set a lighting pattern in the ON mode and a lighting pattern in the DOOR mode to be different from each other.

In this case, it is possible to set the lighting pattern in the ON mode according to the purpose of the lighting in the ON mode and set the lighting pattern in the DOOR mode according to the purpose of the lighting in the DOOR mode.

For example, in the lighting in the ON mode, it is possible to perform continuous lighting taking into account comfortableness in the vehicle interior, visibility in hand work, safety, and the like.

In the lighting in the DOOR mode, it is possible to perform blinking taking into account visibility from other vehicles.

In the lighting in the DOOR mode, it is also possible to gradually increase or gradually reduce the amount of light from the start of the lighting or increase or reduce the amount of light stepwise.

Note that, in the lighting in the ON mode, it is also possible to gradually increase or reduce the amount of light from the start of the lighting or increase or reduce the amount of light stepwise from the start of the lighting.

In this case, it is possible to perform continuous lighting in the lighting in the DOOR mode.

Consequently, even when it is hard to see the state of the operation section 5 and the indicator, it is possible to easily distinguish the ON mode and the DOOR mode.

Furthermore, it is also possible to perform lighting rendition.

As illustrated in FIGS. 6A and 6B, the control section 3d can also control the light-emitting states of the plurality of light-emitting elements 3b1 and 3b2 to set a light-emitting region in the ON mode and a light-emitting region in the DOOR mode to be different from each other.

The control section 3d can light the light-emitting elements 3b1 and 3b2 corresponding to the light-emitting regions to set the light-emitting region in the ON mode and the light-emitting region in the DOOR mode to be different from each other.

The number of light-emitting regions is not limited to two. A plurality of light-emitting regions only have to be provided.

In this case, it is possible to set the number of the light-emitting regions to the number same as the number of the doors of the vehicle and provide the light-emitting regions respectively corresponding to the plurality of doors.

As shown in FIGS. 6A and 6B, the cover 6 can also be divided to match the light-emitting regions.

However, the division of the cover 6 is not always necessary and can be performed as appropriate according to necessity of design or the like.

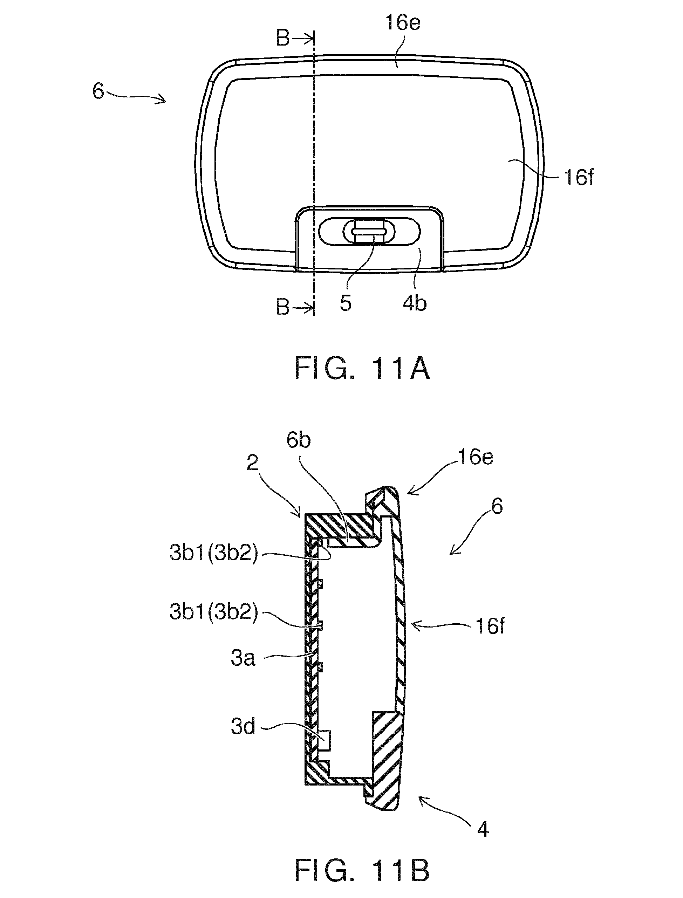

FIGS. 11A and 11B are schematic views for illustrating the light-emitting region in the ON mode and the light-emitting region in the DOOR mode set different from each other.

Note that FIG. 8B is a schematic sectional view in a B-B line direction in FIG. 8A.

As shown in FIGS. 11A and 11B, the light-emitting region can be divided into the frame-like light-emitting region 16e provided in a peripheral edge portion of the cover 6 and the planar light-emitting region 16f provided in the center of the cover 6.

For example, an end section on a light incident side of the light guide section 6b is provided right above the light-emitting elements 3b1 and 3b2 provided at the peripheral edge of the substrate 3a.

That is, the end section on the light incident side of the light guide section 6b faces a part of the pluralities of light-emitting elements 3b1 and 3b2.

Therefore, a light amount in the light-emitting region 16e can be increased. As a result, even when the width dimension of the frame-like light-emitting region 16e is small, it is possible to increase visibility.

The light guide section 6b, the portion corresponding to the light-emitting region 16e of the cover 6, and the portion corresponding to the light-emitting region 16f of the cover 6 can be joined by a two-color molding method or fitting.

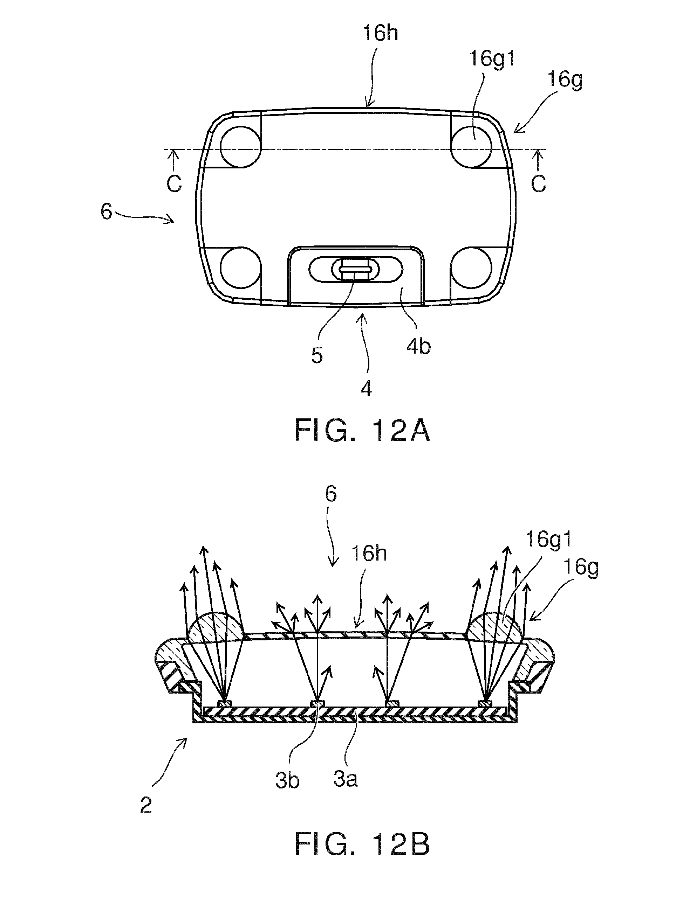

FIGS. 12A and 12B are schematic diagrams for illustrating a light-emitting region in the ON mode and a light-emitting region in the DOOR mode set different from each other.

Note that FIG. 12B is a schematic sectional view in a C-C line direction in FIG. 12A.

As shown in FIGS. 12A and 12B, the light-emitting region can be divided into light-emitting regions 16g provided at the four corners of the cover 6 and a planar light-emitting region 16h provided mainly in the center of the cover 6.

For example, in the lighting in the ON mode, it is possible to light the light-emitting elements 3b1 and 3b2 to only in the light-emitting region 16h or in the light-emitting region 16h and the light-emitting regions 16g.

In the lighting in the DOOR mode, it is possible to light the light-emitting elements 3b1 and 3b2 only in the light-emitting regions 16g.

Optical elements 16g1 can be provided in the light-emitting regions 16g.

The optical elements 16g1 can be, for example, convex lenses illustrated in FIG. 12B. The optical elements 16g1 are not limited to the convex lenses and only have to be optical elements that can generate a desired light condensation characteristic (condense lights in a predetermined position) or generate a desired luminous intensity distribution characteristic (cause desired spread of light).

However, if the optical elements 16g1 are the convex lenses, it is easy to condense lights in the vicinities of the doors of the vehicle and in the vicinities of seats.

Therefore, it is possible to easily distinguish the ON mode and the DOOR mode and improve visibility and safety in getting on and off the vehicle.

It is also possible to perform lighting rendition.

Note that, in the above illustration, the light-emitting regions 16g are provided at the four corners of the cover 6. However, the light-emitting regions 16g are not limited to this.

The number, the shape, the disposing positions, and the like of the light-emitting regions 16g can be changed as appropriate according to the use of the vehicle interior lighting device, the design of interior materials in the vehicle interior, and the like.

In this case, the number of the light-emitting regions 16g can be set the same as the number of the doors of the vehicle. The light-emitting regions 16g can be respectively provided for the plurality of doors.

The optical elements can be provided in at least one of the light-emitting region 16h and the light-emitting regions 16g.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Moreover, above-mentioned embodiments can be combined mutually and can be carried out.

## Claims

1. A vehicle interior lighting device (1) comprising:
a plurality of light-emitting elements (3b);
a switch (3c) for switching an ON mode for lighting at least a part of the plurality of light-emitting elements (3b) and a DOOR mode for lighting at least a part of the plurality of light-emitting elements (3b) when a door of a vehicle is in an open state and extinguishing the plurality of light-emitting elements (3b) when doors of the vehicle are in a closed sate; and
a control section (3d) configured to control light-emitting states of the plurality of light-emitting elements (3b) to set an amount of light in the DOOR mode to be more than an amount of light in the ON mode.

2. The device (1) according to claim 1, wherein the control section (3d) controls the light-emitting states of the plurality of light-emitting elements (3b) to further set a lighting pattern in the ON mode and a lighting pattern in the DOOR mode to be different from each other.

3. The device (1) according to claim 1 or 2, wherein the control section (3d) controls the light-emitting states of the plurality of light-emitting elements (3b) to further set a light-emitting region in the ON mode and a light-emitting region in the DOOR mode to be different from each other.

4. The device (1) according to claim 3, wherein transmittance of light of a first member (16f) provided in the light-emitting region in the ON mode is set different from transmittance of light of a second member (6a, 16e) provided in the light-emitting region in the DOOR mode.

5. The device (1) according to claim 4, wherein
the first member (16f) and the second member (6a, 16a) are joined by a two-color molding method or fitting, and
an end section on a light incident side of the second member (6a, 16e) is formed to face a part of the plurality of light-emitting elements (3b).

6. A vehicle interior lighting device (1) comprising:
a plurality of first light-emitting elements (3b1);
a plurality of second light-emitting elements (3b2);
a switch (3c) for switching an ON mode for lighting at least a part of the plurality of first light-emitting elements (3b1) and the plurality of second light-emitting elements (3b2) and a DOOR mode for lighting at least a part of the plurality of first light-emitting elements (3b1) and the plurality of second light-emitting elements (3b2) when a door of a vehicle is in an open state and extinguishing the plurality of first light-emitting elements (3b1) and the plurality of second light-emitting elements (3b2) when doors of the vehicle are in a closed sate; and
a control section (3d) configured to control light-emitting states of the plurality of first light-emitting elements (3b1) and the plurality of second light-emitting elements (3b2) to set at least any one of a light-emitting color, chromaticity, and color temperature in the ON mode and at least any one of a light-emitting color, chromaticity, and color temperature in the DOOR mode to be different from each other.

7. The device (1) according to claim 6, wherein the control section (3d) controls light-emitting states of the plurality of first light-emitting elements (3b1) and the plurality of second light-emitting elements (3b2) to further set a lighting pattern in the ON mode and a lighting pattern in the DOOR mode to be different from each other.

8. The device (1) according to claim 6 or 7, wherein the control section (3d) controls light-emitting states of the plurality of first light-emitting elements (3b1) and the plurality of second light-emitting elements (3b2) to further set a light-emitting region in the ON mode and a light-emitting region in the DOOR mode to be different from each other.

9. The device (1) according to claim 8, wherein transmittance of light of a first member (16f) provided in the light-emitting region in the ON mode is set different from transmittance of light of a second member (6a, 16e) provided in the light-emitting region in the DOOR mode.

10. The device (1) according to claim 9, wherein
the first member (16f) and the second member (6a, 16e) are joined by a two-color molding method or fitting, and
an end section on a light incident side of the second member (6a, 16e) is formed to face a part of the plurality of first light-emitting elements (3b1) and the plurality of second light-emitting elements (3b2).

11. A vehicle interior lighting device (1) comprising:
a plurality of light-emitting elements (3b);
a switch (3c) for switching an ON mode for lighting at least a part of the plurality of light-emitting elements (3b) and a DOOR mode for lighting at least a part of the plurality of light-emitting elements (3b) when a door of a vehicle is in an open state and extinguishing the plurality of light-emitting elements (3b) when doors of the vehicle are in a closed sate; and
a control section (3d) configured to control light-emitting states of the plurality of light-emitting elements (3b) to set a light-emitting region in the ON mode and a light-emitting region in the DOOR mode to be different from each other.

12. The device (1) according to claim 11, further comprising an optical element (16g1) provided in at least one of the light-emitting region in the ON mode and the light-emitting region in the DOOR mode and configured to generate at least one of a desired light condensation characteristic and a desired luminous intensity distribution characteristic.

13. The device (1) according to claim 11 or 12, wherein the control section (3d) controls light-emitting states of the plurality of light-emitting elements (3b) to cause the plurality of light-emitting elements (3b) to irradiate light on an entire vehicle interior in the ON mode and irradiate light on at least one of the vicinities of the doors of the vehicle and the vicinities of seats in the DOOR mode.

14. The device (1) according to any one of claims 11 to 13, wherein transmittance of light of a first member (16f) provided in the light-emitting region in the ON mode is set different from transmittance of light of a second member (6a, 16e) provided in the light-emitting region in the DOOR mode.

15. The device (1) according to claim 14, wherein
the first member (16f) and the second member (6a, 16e) are joined by a two-color molding method or fitting, and
an end section on a light incident side of the second member (6a, 16e) is formed to face a part of the plurality of light-emitting elements (3b).

16. The device (1) according to any one of claims 11 to 15, wherein the control section (3d) controls light-emitting states of the plurality of light-emitting elements (3b) to further set at least any one of a light-emitting color, chromaticity, color temperature, and an amount of light in the ON mode and at least any one of a light-emitting color, chromaticity, color temperature, and an amount of light in the DOOR mode to be different from each other.

17. The device (1) according to any one of claims 11 to 16, wherein the control section (3d) controls light-emitting states of the plurality of light-emitting elements (3b) to further set a lighting pattern in the ON mode and a lighting pattern in the DOOR mode to be different from each other.
